# EUROPÄISCHE PATENTANMELDUNG

(11) **EP 1 752 400 A2**
(43) Veröffentlichungstag der Anmeldung: **14.02.2007**
(21) Anmeldenummer: 06016480.3
(22) Anmeldetag: 08.08.2006
(51) Int. Cl.: B65G 59/06, B65G 57/30

(54) **Verfahren zum Überführen von Behälterstapeln zu einer Nachfolgeeinrichtung und Vorrichtung zur Durchführung des Verfahrens**

(30) Priorität: 10.08.2005 DE 102005037721
(71) Anmelder: ILLIG Maschinenbau GmbH & Co. KG, 74081 Heilbronn (DE)
(72) Erfinder: Wozny, Michael, 74074 Heilbronn (DE)

(57) **Zusammenfassung**

Durch die Erfindung wird das Überführen von Behälterstapeln (46), bestehend aus Behältern (5) aus thermoplastischem Kunststoff, aus einem Stapelkorb (18) an eine Nachfolgeeinrichtung verbessert.

Die Behälterstapel (46) werden von einer vorgeschalteten Formmaschine und einer Stapeleinrichtung (50) in einen Stapelkorb (18) mit einzelnen Schächten (21) verschoben und lagenweise aus diesem entleert, wobei der Stapelkorb (18) senkrecht zu einer Transporteinrichtung (20) verfahren wird und Rückhaltemittel (24) an seiner Unterseite geschaltet werden, so dass jeweils die unterste Lage der Behälterstapel (46) abgelegt wird. Dieser Vorgang wird bis zur vollständigen Entleerung des Stapelkorbes (18) wiederholt.

Das Verfahren wird so ausgeführt, dass Behälterstapel (46) lagenweise abgelegt werden und dies platzsparend, ohne die Gefahr einer Deformation oder Beschädigung von Behältern (5), des Ineinanderschiebens oder der Auflösung von Behälterstapeln (46) und mit einer hohen Taktrate erfolgt.

## Beschreibung

Die Erfindung betrifft ein Verfahren zum Überführen von Behälterstapeln zu einer Nachfolgeeinrichtung und eine Vorrichtung zur Durchführung des Verfahrens nach der Gattung des Hauptanspruches.

Aus der EP 0995 583 B1 ist eine Thermoformmaschine bekannt, der eine automatische Stapel- und Zähleinrichtung nachgeschaltet ist, bei der Behälterstapel gebildet, auf einen Stapelkorb übergeleitet und von dort lagenweise entnommen werden. Der Stapelkorb ist heb- und senkbar ausgebildet, so dass durch schrittweises Absenken des Stapelkorbes und mittels einer dem Stapelkorb zugeordneten, mit Ausschiebestäben versehenen Ausschiebeeinheit die Behälterstapel vom Stapelkorb auf eine Transporteinrichtung überführt werden. Die Ausschiebeeinheit, der ein Linearantrieb zugeordnet ist, schiebt die Behälterstapel durch Druck auf den Boden der zuletzt eingestapelten Behälter aus dem Stapelkorb auf die Transporteinrichtung. Dadurch ist die Gefahr der Deformation des letzten Behälters eines Stapels und des Ineinanderschiebens der Behälter gegeben. Durch die Anordnung von Abschiebeeinheit, Stapelkorb und Transporteinrichtung hintereinander ergibt sich ein Platzverbrauch in der Größenordnung von mindestens dem Dreifachen der Behälterstapellänge.

Weiterhin ist aus der Druckschrift DE 8620200 U1 eine einer Thermoformmaschine nachgeschaltete Stapeleinrichtung bekannt, bei der die gebildeten Behälterstapel in einen am Maschinenrahmen befestigten, nicht verschiebbaren Stapelkorb mit vertikalen Schachtwänden überführt werden. Dem Maschinenrahmen ist ein Rückhaltemittel zugeordnet, das als horizontal verschiebbares Blech ausgebildet ist und die offene Unterseite des Stapelkorbs verschließt. Zum Entleeren vertikal angeordneten Reihen von Behälterstapeln wird das Blech um einen Betrag verschoben, der einer Schachtbreite entspricht. Die Behälterstapel fallen aus dem Stapelkorb auf eine Transporteinrichtung, die mit formschlüssigen Mitnahmeeinrichtungen versehen ist und die die aus dem Stapelkorb entleerten Behälterstapel vom Raum unterhalb des geöffneten Schachtes verschiebt. Anschließend wird das Blech um einen weiteren Betrag verschoben, um den nächsten Schacht zur Entleerung freizugeben. Dieser Vorgang wird bis zur vollständigen Entleerung wiederholt. Beim Verschieben des Bleches zum Öffnen eines Schachtes fallen die Behälterstapel um ein Maß, das mindestens dem Durchmesser der Behälter entspricht, auf die Transporteinrichtung, was zur Deformierung der Behälter und zum Auflösen der Behälterstapel führen kann. Der Raum unterhalb des geöffneten Schachtes muss durch Verschieben der Transporteinrichtung nach der Ablage jedes einzelnen Behälterstapels geleert werden. Dadurch wird die Taktzahl der Formmaschine limitiert. Das Abwälzen der oberen Lage auf der unteren Lage der Behälterstapel kann zur Auflösung der Behälterstapel und zur Deformation und Beschädigung der Behälter führen.

Die Druckschrift GB 822 384 zeigt eine Ablageeinrichtung für scheiben-ähnliche Artikel, umfassend ein Magazin mit einem Paar federbetätigter Klauen und ein Widerlager und Öffnungsrollen zum Öffnen der Klauen. Die Teile werden in geringem Abstand über dem Behälterboden entlassen, wobei der Abstand nicht zu Null gebracht werden kann aufgrund der kreisförmigen Schwenkbewegung der Klauen. Diese Anordnung ist zur Verwendung in einer Thermoformmaschine mit ihrem engen Raster der Behälterstapel nicht mehrfach in Längs- und Querrichtung nebeneinander anordenbar, da das Widerlager und die Öffnungsrollen am Magazin einen zu hohen Platzbedarf aufweisen.

In der Druckschrift EP 1 232 972 A1 wird eine Vorrichtung zum Entladen von gestapelten Deckeln gezeigt, bei der die Deckel von vier Seiten mit Stäben umgriffen werden, die rückziehbare Haken aufweisen. Das Prinzip von Rückhaltemitteln mit rückziehbaren Haken benötigt eine untergreifbare horizontal liegende geschlossene Kante, wie sie zwar Deckel, aber nicht jedoch horizontal angeordnete Behälterstapel aufweisen.

Die Druckschrift DE 79 28 591 U1 offenbart eine Stapelvorrichtung für Einzel-Becher, die in einer sogenannten W-Anordnung die Form- und Stanzmaschine verlassen und in Stapeln formiert werden sollen. Die Becher werden von einem Saugband erfasst und in einen Stapelschacht abgeworfen. Dort werden sie über bewegliche Klappen gesteuert in die Stapelschächte geleitet und am Schachtboden zum Zweck der Stapelbildung von einem Zylinder ausgeschoben. Die Methode des Abwerfens kann zu Verkantungen und Stauungen in den Stapelschächten führen und ist für moderne Form- und Stanzmaschinen mit hoher Ausstoßleistung nicht geeignet.

Der Erfindung liegt die Aufgabe zugrunde, das Verfahren so auszubilden, dass Behälterstapel lagenweise abgelegt werden. Dieses soll platzsparend, ohne die Gefahr einer Deformation oder Beschädigung von Behältern, des Ineinanderschiebens oder der Auflösung von Behälterstapeln und mit einer hohen Taktrate erfolgen.

Gelöst ist diese Aufgabe durch die im Kennzeichen des Hauptanspruches angegebenen Maßnahmen. Die Vorrichtung ist gekennzeichnet durch die Merkmale des Anspruches 4. Weiterbildungen sind Merkmale der jeweiligen Unteransprüche.

Die Ausführungsbeispiele der Erfindung sind anhand der schematischen Zeichnungen näher beschrieben. Es zeigen:
- Fig. 1: eine Seitenansicht der Vorrichtung im Zusammenwirken mit einer Stapeleinrichtung
- Fig. 2 + 3: einen Ausschnitt der Seitenansicht der Vorrichtung mit niedriger und hoher Zuführposition des Stapelkorbs
- Fig. 4 - 10: die Abfolge der Teilschritte des Verfahrens
- Fig. 11 + 12: einen Stapelkorb gemäß einer ersten Ausführung der Rückhalteinrichtung in einer Vorderansicht in Sperrstellung bzw. Entsperrstellung
- Fig. 13 + 14: einen Stapelkorb gemäß einer Weiterbildung der ersten Ausführung der Rückhalteeinrichtung in einer Vorderansicht in Sperrstellung bzw. Entsperrstellung
- Fig. 15 + 16: einen Stapelkorb gemäß einer zweiten Ausführung der Rückhalteeinrichtung in einer Vorderansicht in Sperrstellung bzw. Entsperrstellung
- Fig. 17 - 20: die zeitliche Abfolge der Positionen des Stapelkorbs

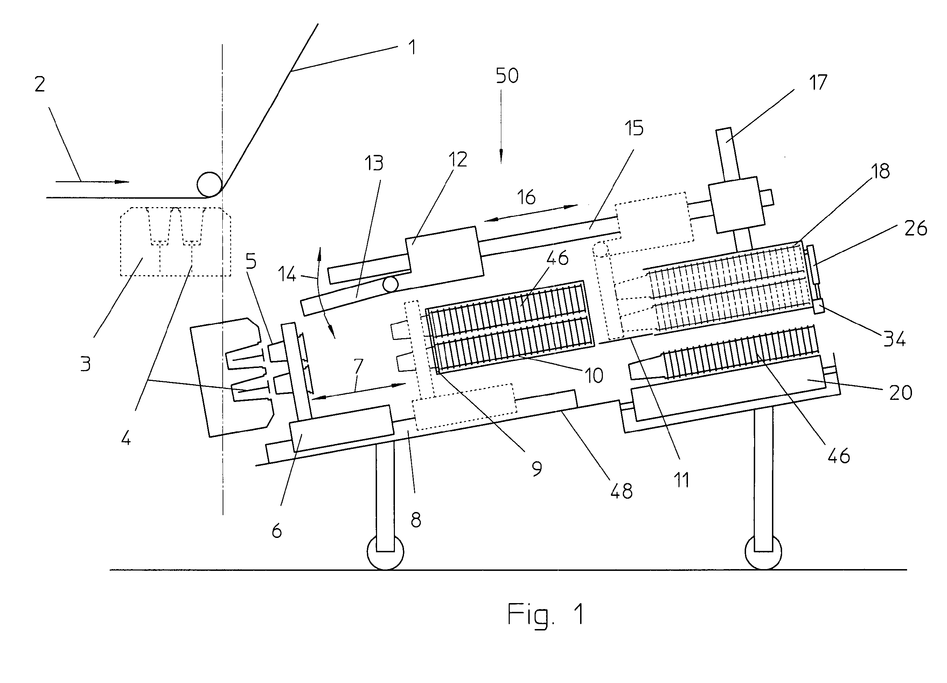

Die Vorrichtung zur Durchführung des Verfahrens ist Teil einer Gesamtanlage und gemäß Fig. 1 einer Thermoformmaschine nachgeschaltet, die eine taktweise durch einen Folientransport 2 bewegte Folienbahn 1 erwärmt, durch Druckluft in einer kombinierten Form-/Stanzstation tiefzieht und geformte Behälter 5 ausstanzt. Ein Unterteil 3 eines Form-/Stanzwerkzeuges wird nach dem Stanzvorgang geschwenkt und abgesenkt. Die Behälter 5 werden an eine Stapeleinrichtung 50 übergeben, zu Behälterstapeln 46 gruppiert und diese in einen Stapelkorb 18 überführt.
In der erfindungsgemäßen Vorrichtung werden die Behälterstapel 46 lagenweise durch das Zusammenwirken von einer durch einen Antrieb 26 betätigten Rückhalteeinrichtung 34, einem Antrieb 17 zur Höhenverschiebung des Stapelkorbes 18 und einer Transporteinrichtung 20 an eine Nachfolgeeinrichtung übergeben.
Die Transporteinrichtung 20 kann als mit Mitnehmereinrichtungen versehenes Transportband in Längs- oder Querrichtung ausgebildet sein oder als Ablage, die nach dem Ablegen einer Lage von Behälterstapeln 46 zur Entleerung verschwenkt oder verschoben wird.

Das Verfahren wird beispielhaft beschrieben im Zusammenwirken mit einer Stapeleinrichtung gemäß Figur 1. Die Vorrichtung kann mit anderen geeigneten Stapeleinrichtungen zusammenwirken.
Die aus einer taktweise durch einen Folientransport 2 bewegten Folienbahn 1 aus thermoplastischem Kunststoff geformten und ausgestanzten Behälter 5 werden aus dem Unterteil 3 eines Form-/Stanzwerkzeuges durch Ausstoßer 4 ausgeschoben und von einer Fangplatte 6 übernommen. Die Fangplatte 6 wird taktweise in Form einer Linearbewegung 7 zwischen einer vorderen und einer hinteren Stellung auf einer Linearführung 8, die einem Maschinenrahmen 48 zugeordnet ist, verschoben und übergibt die Behälter 5 an eine Stapelplatte 9 eines Pufferkorbes 10, in dem die Behälter 5 zu Behälterstapeln 46 gruppiert werden. Ist durch eine Anzahl von Behältern 5 die vorgegebene Länge der Behälterstapel 46 erreicht, so wird ein Ausschieber 13 einer Ausschiebeeinheit 12 in einer Schwenkbewegung 14 vor die Böden der Behälter 5 verschoben und weiter in einer Linearbewegung 16 entlang einer Linearführung 15 in Richtung eines Stapelkorbes 18, wobei die Behälterstapel 46 in einer Stapelrinne 11 geführt werden. Unterhalb des Stapelkorbs 18 ist eine Transporteinrichtung 20 angeordnet.

Das Zuführen von Behälterstapeln 46 in einen Stapelkorb 18 kann auch auf andere Weise erfolgen. So kann das Zuführen der Behälter zu einem Pufferkorb 10 über eine Wendestapeleinrichtung vorgenommen werden, wie es aus der DE 198 52 359 C1 bekannt ist. Bei einer anderen, aus der DE 296 08 477 U1 bekannten Stapeleinrichtung, werden die ausgestanzten Behälter vom Unterteil eines Form-/Stanzwerkzeuges durch Ausstoßer ausgeschoben und von einer Übergabeeinrichtung in eine mit entsprechenden Aufnahmen versehene umlaufende Transporteinrichtung überführt und horizontal bis zu einer Stapelstation verschoben, wo sie zu vertikalen Behälterstapeln gruppiert werden. Von dort werden sie durch einen vertikal beweglichen und schwenkbaren Pufferkorb vertikal verschoben und so verschwenkt, dass die Behälterstapel aus einer horizontalen Lage vom Pufferkorb in einen Stapelkorb 18 überführt werden könnten.

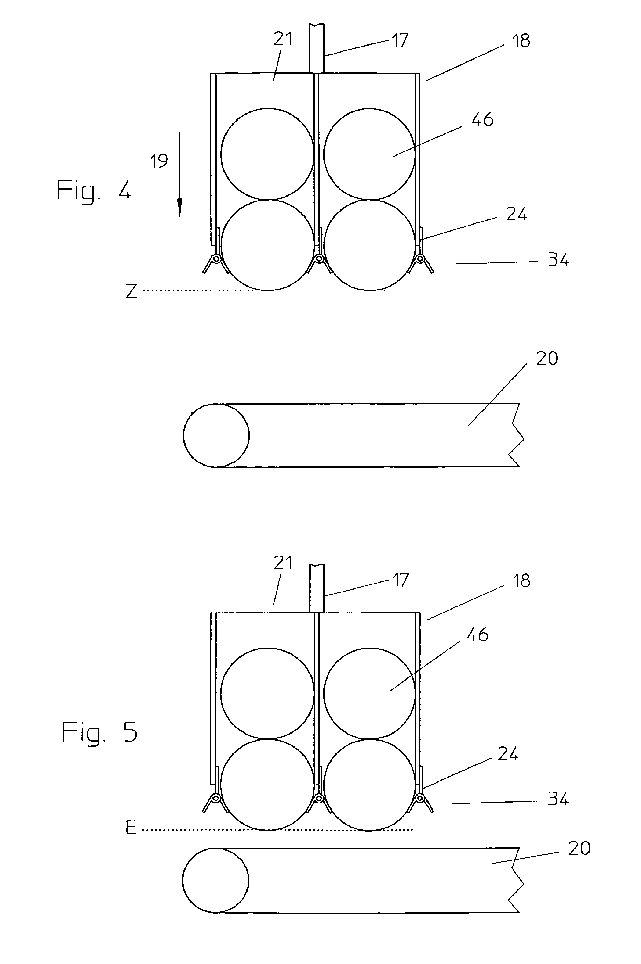

Der erfindungsgemäße Verfahrensablauf und das Verschieben des Stapelkorbs 18 im Zusammenwirken mit den Rückhaltemitteln 24 ist in den Figuren 4 - 10 anhand einer 1. Ausgangslage dargestellt, in der das Zuführen der Behälterstapel 46 in den Stapelkorb 18 erfolgt. Bei dieser 1. Ausgangslage besteht ein größerer Abstand zwischen der untersten Lage der Behälterstapel 46 und einer darunter angeordneten Transporteinrichtung 20. Unter größerem Abstand ist zu verstehen, dass man in dieser Stellung kein Öffnen der Rückhaltemittel 24 vornehmen kann, weil sich sonst die zweite Lage 44 von Behälterstapeln 46 soweit absenken würde, dass sie nach Schließen der Rückhaltemittel 24 nicht zurückhalten werden könnte. Je nach konstruktiven Gegebenheiten kann dabei der Abstand größer (wie im Diagramm 17 und 18 angenommen) oder kleiner als der Behälterdurchmesser sein. Das dabei ablaufende Verfahren ist im Anspruch 1 beansprucht.

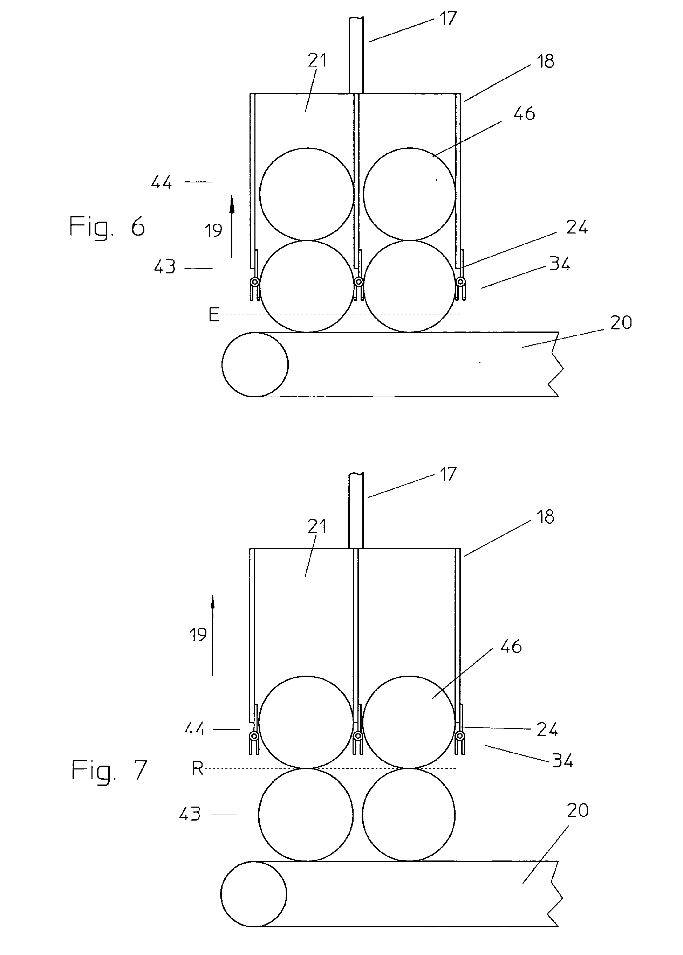

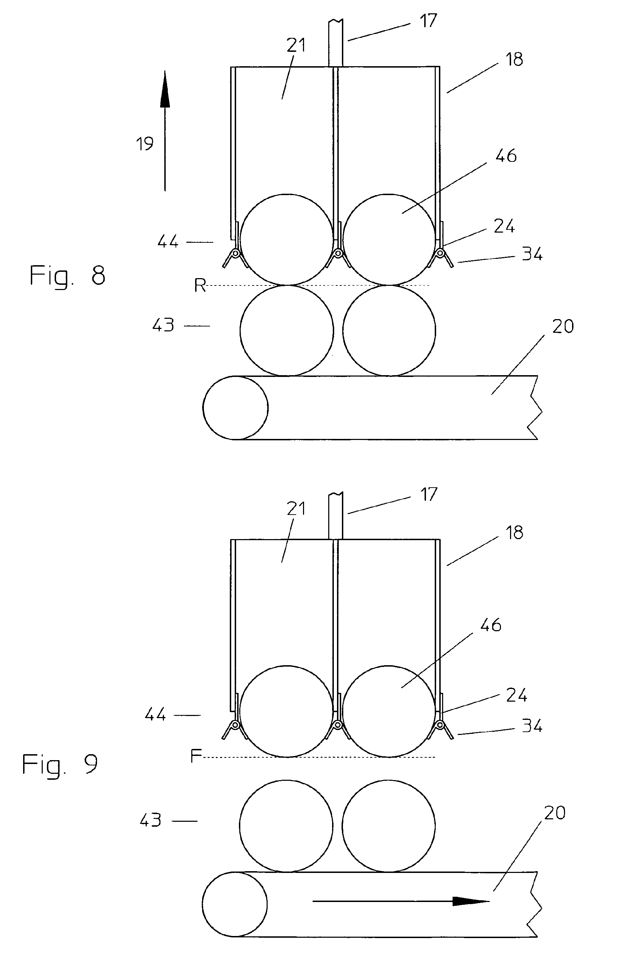

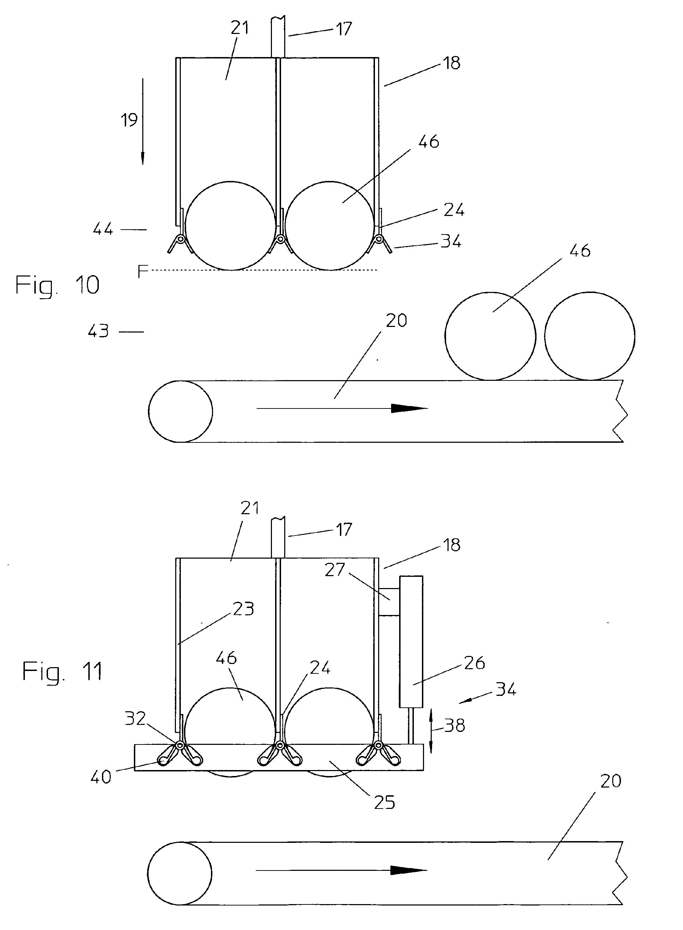

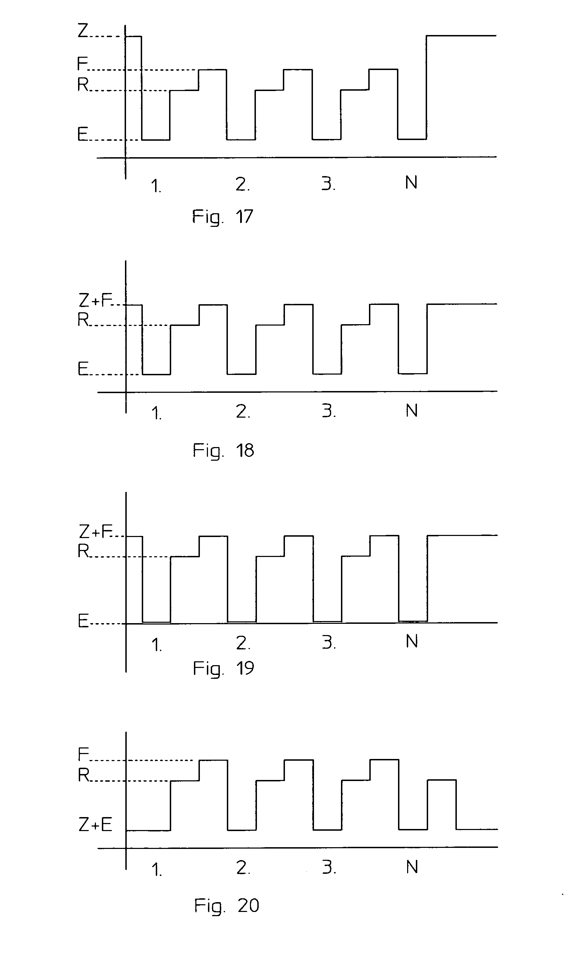

Der Stapelkorb 18 wird in einer Linearbewegung 19 durch einen ihm zugeordneten Antrieb 17 von einer Zuführposition Z (Fig. 4) in eine Abgabeposition E (Fig. 5) verschoben, wobei die in den Stapelkorb 18 verschobenen Behälterstapel 46 durch eine Rückhalteeinrichtung 34 zurückgehalten werden. Die Rückhalteeinrichtung 34 umfasst Rückhaltemittel 24, die zur Aufhebung der Rückhaltung betätigt werden (Fig. 6). Der Stapelkorb 18 wird danach soweit angehoben, bis in der Rückhalteposition R die zweite Lage 44 von Behälterstapeln 46 zurückgehalten werden kann (Fig. 7). Die Rückhaltemittel 24 werden erneut betätigt zur Rückhaltung der zweiten Lage 44 der Behälterstapel 46 (Fig. 8). Der Stapelkorb 18 wird weiter angehoben, bis eine Freigabeposition F erreicht ist, in der der Kontakt der zweiten Lage 44 mit der unteren Lage 43 der Behälterstapel 46 aufgehoben ist (Fig. 9). Der Raum unterhalb des Stapelkorbes 18 wird anschließend mit Hilfe der Transporteinrichtung 20 geleert (Fig. 10). Sodann wird der Stapelkorb 18 aus der Freigabeposition F wieder in die Abgabeposition E verschoben. Diese Schritte werden bis zur vollständigen Entleerung des Stapelkorbes 18 wiederholt, d.h. bis der letzte Behälterstapel 46 auf die Transporteinrichtung 20 übergeben ist, denn jetzt können der Stapelkorb 18 direkt in die Zuführposition Z und die Rückhalteeinrichtung 34 in Rückhaltestellung gebracht werden.
Der oben genannte Verfahrensablauf wird in der Darstellung der Bewegung des Stapelkorbs 18 über der Zeit bis zur vollständigen Entleerung in einem Diagramm in Fig. 17 bei vier Stapelreihen gezeigt.
Nach einer bevorzugten Form des Verfahrens ist die Zuführposition Z des Stapelkorbs 18 identisch mit der Freigabeposition F des Stapelkorbs 18 (Fig. 18), in der die Transporteinrichtung 20 den Raum unter dem Stapelkorb 18 räumt. Das reduziert die Anzahl der Positionen des Stapelkorbs 18 auf drei, was die Ansteuerung und Gestaltung des Antriebs 17 vereinfacht.

In einer vorteilhaften Ausführung wird die Abgabeposition E des Stapelkorbs 18 so gewählt, dass die Behälterstapel 46 auf der Transporteinrichtung 20 aufsitzen (siehe Diagramm Fig. 19).
In einer weiteren Ausführung wird die Abgabeposition E des Stapelkorbs 18 so gewählt, dass die Behälterstapel 46 von der Transporteinrichtung 20 einen geringen Abstand aufweisen (Fig. 18), z. B. geringer als der halbe Durchmesser eines Behälters 5, wobei davon ausgegangen wird, dass ein freier Fall um diesen Abstand keine Deformation zur Folge hat.

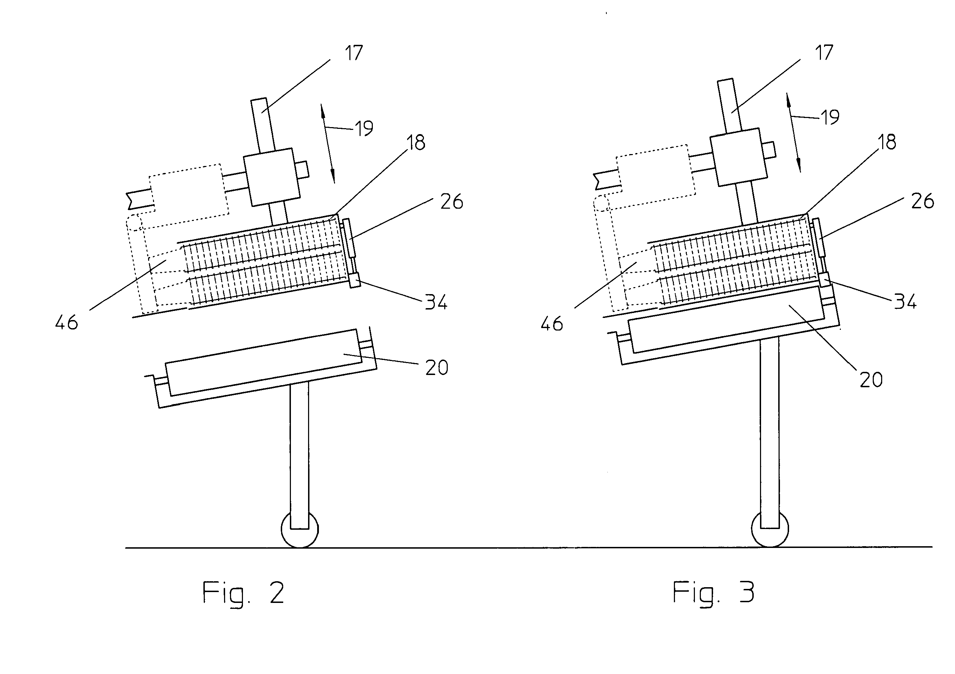

Eine 2. Ausgangslage des Stapelkorbs 18 zur Transporteinrichtung 20 kann aber auch die sein - siehe Figur 3 - dass die Zuführposition Z mit der Abgabeposition E identisch ist, so dass nur ein geringer Abstand zwischen der untersten Lage eines zugeführten Behälterstapels 46 und der Transporteinrichtung 20 besteht. Das erfindungsgemäße Verfahren läuft dann versetzt ab, wie es im unabhängigen Anspruch 3 beansprucht und im Diagramm der Figur 20 dargestellt ist.
Nach der Überführung der Behälterstapel 46 in den Stapelkorb 18 werden die Rückhaltemittel 24 zur Entsperrung der unteren Lage 43 der Behälterstapel 46 betätigt und der Stapelkorb 18 wird soweit in die Rückhalteposition R angehoben, bis die zweite Lage 44 von Behälterstapeln 46 zurückgehalten werden kann. Die Rückhaltemittel 24 werden erneut betätigt zur Rückhaltung der zweiten Lage 44 der Behälterstapel 46. Der Stapelkorb 18 wird weiter in die Freigabeposition F angehoben, bis der Kontakt der zweiten Lage 44 mit der unteren Lage 43 der Behälterstapel 46 aufgehoben ist. Der Raum unterhalb des Stapelkorbs 18 wird anschließend mit Hilfe der Transporteinrichtung 20 geräumt. Dann fährt der Stapelkorb wieder in die Zuführposition Z/Abgabeposition E. Diese Schritte werden bis zur vollständigen Entleerung des Stapelkorbs 18 und bis zum Übergeben der letzten Lage von Behälterstapeln 46 an die Nachfolgeeinrichtung wiederholt, wobei es genügt, nach dem Ablegen der letzten Lage von Behälterstapeln 46 den Stapelkorb 18 zum Räumen durch die Transporteinrichtung 20 soweit zu verschieben, dass die lichte Höhe zwischen der Transporteinrichtung 20 und den an der Unterseite des Stapelkorbes 18 befestigten Rückhalteeinrichtungen 24 größer ist als der Durchmesser der Behälter 5. Nach dem Räumen wird der Stapelkorb 18 so weit verschoben, bis die Zuführposition Z bzw. Abgabeposition E wieder erreicht ist.

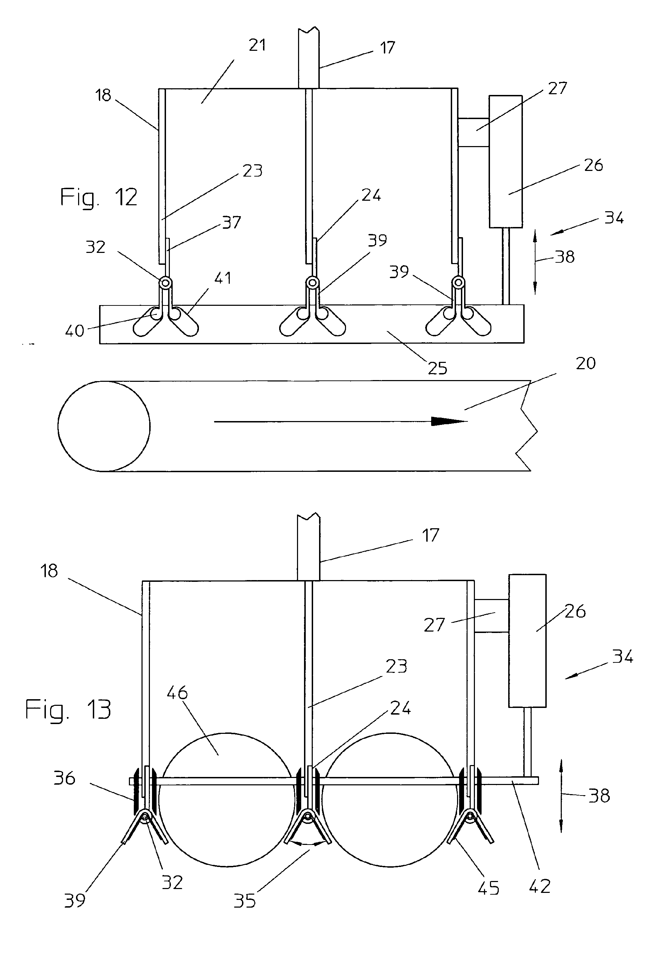

Die Rückhaltestellung einer ersten Ausführungsform der Rückhalteeinrichtung 34 ist in der Figur 11 und die Freigabestellung in der Figur 12 dargestellt. Der Stapelkorb 18 besteht aus einzelnen Schächten 21, an deren Unterseite eine mit einem Antrieb 26, der über die Befestigung 27 an einer äußeren Schachtwand 23 angeordnet ist, zu ihrer Betätigung in Verbindung stehende Rückhalteeinrichtung 34 angeordnet ist. Der Stapelkorb 18 ist über der Transporteinrichtung 20 angeordnet.

Die Rückhalteeinrichtung 34 weist in vorteilhafter Weise als Rückhaltemittel 24 dreiteilige Scharniere 32 auf, wobei das jeweils eine Scharnierteil 37 an der Schachtwand 23 befestigt ist und die jeweils anderen beiden bewegbaren Scharnierteile 39 zwischen einer Rückhaltestellung und einer Freigabestellung verschiebbar ausgebildet sind.
Die Rückhalteeinrichtung 34 umfasst in einer Weiterbildung eine in einer Vertikalbewegung 38 verschiebbare Kulisse 25 mit Kulissenbahnen 41, wobei in den Kulissenbahnen 41 jeweils ein bewegliches Scharnierteil 39 der dreiteiligen Scharniere 32 mittels eines an ihm befestigten Bolzens 40 geführt ist.

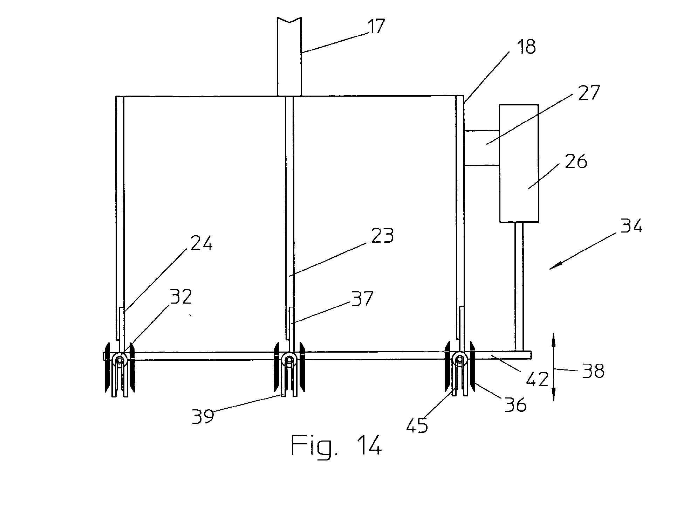

In einer Weiterbildung, dargestellt in Figur 13 in Rückhaltestellung und in Figur 14 in Freigabestellung, umfasst die Rückhalteeinrichtung 34 Federn 45, die die dreiteiligen Scharniere 32 in der Rückhaltestellung unter einem Winkel 35 halten. Es wird vorgeschlagen, die Federn 45 als Schenkel- oder Blattfedern auszuführen. Die Verschiebung der dreiteiligen Scharniere 32 erfolgt durch den Antrieb 26 der Rückhalteeinrichtung 34.

Die Rückhalteeinrichtung 34 umfasst in dieser Weiterbildung eine Leiste 42, der Kulissen 36 zugeordnet sind.

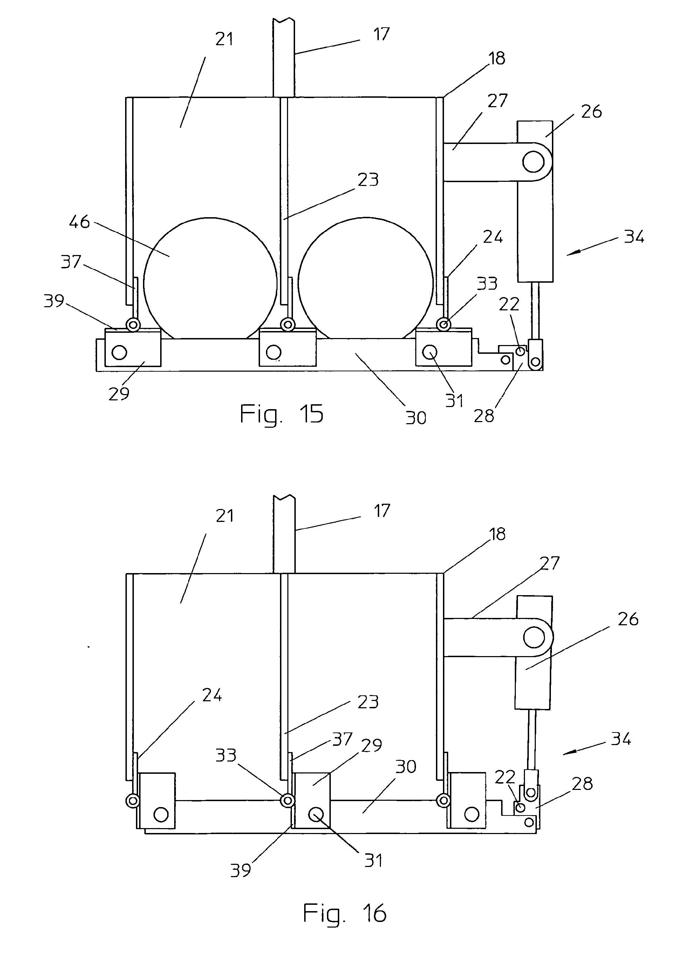

Eine zweite Ausführungsform der Rückhalteeinrichtung 34 ist in den Figuren 15 und 16 dargestellt.

Die Rückhalteeinrichtung 34 umfasst als Rückhaltemittel 24 zweiteilige Scharniere 33. Die jeweils einen Scharnierteile 37 sind jeweils an den Schachtwänden 23 befestigt, die beweglichen Scharnierteile 39 sind von der Rückhalteeinrichtung 34 verschiebbar.

Die Rückhalteeinrichtung 34 umfasst eine Schwenkplatte 28, die ortsfest im Drehpunkt 22 am Stapelkorb 18 gelagert ist. Mit der Schwenkplatte 28 ist gelenkig eine Leiste 30 verbunden, die sich über alle Schächte 21 erstreckt und pro Schachtwand 23 mit einer Platte 29 gelenkig im Drehpunkt 31 verbunden ist.

Es wird weiterhin vorgeschlagen, den Antrieb 26 der Rückhalteeinrichtung 34 als linearen Fluidantrieb in Form eines Pneumatik- oder Hydraulikzylinders auszubilden. Eine weitere vorteilhafte Ausbildung stellt ein motorischer Antrieb dar in Form eines motorischen Linearantriebes, z.B. eines Spindelantriebes.

## Patentansprüche

1. Verfahren zum Überführen von in einem Stapelkorb in mehreren Lagen übereinander angeordneten Behälterstapeln, bestehend aus Behältern aus thermoplastischem Kunststoff, zu einer Nachfolgeeinrichtung, wobei dem Stapelkorb die Behälterstapel von einer vorgeschalteten Formmaschine und einer Stapeleinrichtung in einer Zuführposition, in der die unterste Lage von Behälterstapeln in größerem Abstand über der Transporteinrichtung liegt, zugeführt und an dessen Unterseite durch eine Rückhalteeinrichtung zunächst gehalten und dann auf eine Transporteinrichtung übergeben werden, die die Behälterstapel zu der Nachfolgeeinrichtung überführt, **dadurch gekennzeichnet, dass**
- der Stapelkorb (18) in eine Abgabeposition (E) verschoben wird, in der die unterste Lage von Behälterstapeln (46) auf einer Transporteinrichtung (20) aufsitzt oder in einem Abstand über ihr liegt, der den halben Durchmesser der eingestapelten Behälter nicht überschreitet,
- danach die Rückhalteeinrichtung (34) in eine Freigabestellung verschoben und
- der Stapelkorb (18) soweit in eine Rückhalteposition (R) angehoben wird, dass die nächste Lage von Behälterstapeln (46) zurückgehalten werden kann,
- die Rückhalteeinrichtung (34) in eine Rückhaltestellung und
- der Stapel korb (18) in eine Freigabeposition (F) gebracht wird, in der die auf die Transporteinrichtung (20) übergebene Lage von Behälterstapeln (46) frei aufliegt und
- daraufhin diese Behälterstapel (46) durch die Transporteinrichtung (20) zur Nachfolgeeinrichtung geführt werden,
- wobei dieser Bewegungsablauf sooft wiederholt wird, bis die letzte Lage von Behälterstapeln (46) aus dem Stapelkorb (18) auf die Transporteinrichtung (20) übergeben ist und danach der Stapelkorb (18) in die Zuführposition (Z) und die Rückhalteeinrichtung (34) in Rückhaltestellung gebracht wird.

2. Verfahren zum Überführen von in einem Stapelkorb in mehreren Lagen übereinander angeordneten Behälterstapeln, bestehend aus Behältern aus thermoplastischem Kunststoff, zu einer Nachfolgeeinrichtung, wobei dem Stapelkorb die Behälterstapel von einer vorgeschalteten Formmaschine und einer Stapeleinrichtung in einer Zuführposition, in der die unterste Lage von Behälterstapeln in einem Abstand über der Transporteinrichtung liegt, der den halben Durchmesser der eingestapelten Behälter nicht überschreitet, zugeführt und an dessen Unterseite durch eine Rückhalteeinrichtung zunächst gehalten und dann auf eine Transporteinrichtung übergeben werden, die die Behälterstapel zu der Nachfolgeeinrichtung überführt, **dadurch gekennzeichnet, dass**
- die Rückhalteeinrichtung (34) in eine Freigabestellung gebracht
- der Stapelkorb (18) soweit in eine Rückhalteposition (R) angehoben wird, dass die nächste Lage von Behälterstapeln (46) zurückgehalten werden kann,
- die Rückhalteeinrichtung (34) in Rückhaltestellung
- und der Stapelkorb (18) in eine Freigabeposition (F) gebracht wird, in der die unterste Lage von Behälterstapeln (46) auf der Transporteinrichtung (20) frei aufliegt,
- daraufhin diese Behälterstapel (46) durch die Transporteinrichtung (20) zur Nachfolgeeinrichtung geführt werden,
- und danach der Stapelkorb (18) in die Zuführposition (Z) verschoben wird,
- wobei dieser Bewegungsablauf sooft wiederholt wird, bis alle Lagen von Behälterstapeln (46) zur Nachfolgeeinrichtung geführt sind
- und wobei nach dem Ablegen der letzten Lage von Behälterstapeln (46) auf der Transporteinrichtung (20) der Stapelkorb (18) zur Freigabe der Behälterstapel (46) mindestens soweit verschoben wird, bis die lichte Höhe zwischen der Transporteinrichtung (20) und der an der Unterseite des Stapelkorbes (18) befestigten Rückhalteeinrichtung (34) größer ist als der Durchmesser der Behälter (5).

3. Vorrichtung zum Überführen von in mehreren Lagen übereinander angeordneten Behälterstapeln, bestehend aus Behältern aus thermoplastischem Kunststoff, zu einer Nachfolgeeinrichtung, mit einem oberhalb der Transporteinrichtung angeordneten Stapelkorb aus einzelnen Schächten zum Aufnehmen der von einer Formmaschine und einer Stapeleinrichtung zugeführten Behälterstapel, einer Rückhalteeinrichtung am unteren Ende des Stapelkorbs und einer Transporteinrichtung zum Überführen der Behälterstapel zu der Nachfolgeeinrichtung, **dadurch gekennzeichnet, dass** der Stapelkorb (18) mit einem Antrieb (17) zu seiner Höhenverschiebung verbunden ist und die Rückhalteeinrichtung (34) so ausgebildet ist, dass ihre Rückhaltemittel (24) als Scharniere (32, 33) ausgebildet sind und an jedem Schacht (21) angeordnet und gemeinsam über einen Antrieb (26) betätigbar sind.

4. Vorrichtung nach Anspruch 3, **dadurch gekennzeichnet, dass** die Rückhaltemittel (24) als dreiteilige Scharniere (32) ausgebildet sind, wobei das jeweils eine Scharnierteil (37) an einer Schachtwand (23) befestigt ist und die jeweils anderen beiden bewegbaren Scharnierteile (39) zwischen einer Rückhaltestellung und einer Freigabestellung für die Behälterstapel (46) verschiebbar ausgebildet sind.

5. Vorrichtung nach Anspruch 4, **dadurch gekennzeichnet, dass** die Rückhaltemittel (24) eine vertikal verschiebbare Kulisse (25) mit Kulissenbahnen (41) umfasst, wobei in den Kulissenbahnen (41) jeweils ein bewegliches Scharnierteil (39) der dreiteiligen Scharniere (32) mittels eines an ihm befestigten Bolzens (40) geführt ist.

6. Vorrichtung nach Anspruch 4, **dadurch gekennzeichnet, dass** die Rückhalteeinrichtung (34) Federn (45) umfasst, die die dreiteiligen Scharniere (32) in der Rückhaltestellung halten und die Verschiebung der dreiteiligen Scharniere (32) in die Freigabestellung durch den Antrieb (26) der Rückhalteeinrichtung (34) erfolgt.

7. Vorrichtung nach Anspruch 6, **dadurch gekennzeichnet, dass** die Rückhalteeinrichtung (34) eine vertikal verschiebbare Leiste (42) mit Kulissen (36) umfasst.

8. Vorrichtung nach Anspruch 3, **dadurch gekennzeichnet, dass** die Rückhaltemittel (24) als zweiteilige Scharniere (33) ausgebildet sind, wobei das jeweils eine Scharnierteil (37) an der Schachtwand (23) und das jeweils andere, bewegbare Scharnierteil (39) mittels des Antriebes (26) zwischen einer Rückhaltestellung und einer Freigabestellung für die Behälterstapel (46) verschiebbar ausgebildet sind.
